# EUROPEAN PATENT SPECIFICATION

(11) **EP 3 071 081 B1**
(45) Date of publication and mention of the grant of the patent: **07.11.2018**
(21) Application number: 14780702.8
(22) Date of filing: 17.09.2014
(51) Int. Cl.: A47J 37/06

(54) **METHOD FOR MANUFACTURING A DEVICE FOR COOKING FOOD PRODUCTS BY CONTACT OF GRILLE TYPE**
VERFAHREN ZUR HERSTELLUNG EINER VORRICHTUNG ZUM KOCHEN VON NAHRUNGSMITTELN DURCH GITTERKONTAKT
PROCÉDÉ POUR FABRIQUER UN DISPOSITIF POUR CUIRE DES ALIMENTS PAR CONTACT, DE TYPE GRILLE

(30) Priority: 22.11.2013 FR 1361533
(43) Date of publication of application: 28.09.2016
(73) Proprietor: Illinois Tool Works Inc., Glenview, IL 60025 (US)
(72) Inventor: BRUN, Jean-Marc, 39230 Passenans (FR)
(74) Representative: Gevers & Orès
(86) International application number: PCT/US2014/056119
(87) International publication number: WO 2015/076918

(56) References cited:
- WO-A1-2013/001477
- US-A- 3 613 778
- US-A- 3 968 787

## Description

The invention relates to a method for manufacturing a device for cooking by contact, in particular of griddle type.

A plate cooking device is known, of griddle type, comprising a cooking plate, intended to receive at least one food product to be cooked, and gas or electric heating means for heating and maintaining the plate at a substantially uniform and constant temperature.

The cooking plate comprises a bottom face and a top face, on which the food products to be cooked are placed. Hereinafter in this description, "bottom face" will be understood to mean the underside of the cooking plate when it is horizontal, in the position of use, and "top face" will be understood to mean the top of the cooking plate when it is horizontal, in the position of use.

The plate cooking device further comprises temperature control means in the form of a sensor mounted in or under the cooking plate and making it possible to engage the heating means when the temperature decreases.

In a first type of device, the heating means are arranged to directly heat the bottom face of the plate. Thus, when the heating means heat the bottom face of the plate, the heat is transmitted to all of the plate as far as its top face, thus making it possible to cook food products placed on the top face.

The operation of the cooking plate involves a preheat period at the end of which the cooking plate reaches a cooking temperature. When the cooking plate reaches its cooking temperature, the placement of a food product to be cooked on the top face of the cooking plate results in a sudden drop in temperature which decreases the cooking effectiveness.

A known solution to this problem consists in drastically increasing the cooking temperature of the cooking plate to, for example, 350° Celsius, for example by increasing the duration of the cooking plate preheat period. A number of problems then arise. First of all, in this type of device, the cooking plate is relatively thick, of the order of 20 mm, which means there is a relatively significant inertia on cutoff. Cutoff should be understood to mean the drop in temperature of the plate. Thus, when a food product to be cooked is placed on the cooking plate, the temperature of the plate in the area of contact drops locally. The time needed to bring the plate back up to the cooking temperature is then that much longer when the plate is thick and the food product to be cooked is placed away from the temperature control point. This creates temperature disparities at different points on the top face of the cooking plate. These disparities result in differences in the cooking of the food products depending on their placement on the cooking plate and, in addition, certain points of the cooking plate become overheated when they do not support any food product. Finally, such overheating provokes, during the cooking of the food product, the production of toxic compounds on the top face of the cooking plate in an area peripheral to the food product to be cooked. Such compounds are, furthermore, difficult to clean and cause fumes that are harmful, even poisonous, to the operator of the device.

Another device is known that aims to partly resolve this problem, going by the protected brand name Accutemp®. Such a plate cooking device, of griddle type, comprises a cooking plate, intended to receive at least one food product to be cooked, and gas or electric heating means for heating and maintaining the plate at a substantially uniform and constant temperature by the generation of saturated steam and water condensation under the plate.

Thus, when the device is operated, water present in a vacuum cavity formed in the device under the cooking plate is heated by the heating means to, for example, 190° Celsius. The characteristics of the saturated steam are such that at this temperature there is a corresponding pressure of 13 bar. The laws of saturated steam indicate that an equilibrium is formed between temperature and pressure, throughout the cavity. The phenomena of condensation and boiling combine in such a way that there cannot be, in a stable manner, any temperature deviation in a cavity in which only pure water and steam are present. Thus, when a food product to be cooked is placed on the top face of the cooking plate, the induced temperature drop provokes a saturation of steam present in the cavity, producing a condensation of water on the bottom surface of the plate and a heat flux at the surface of contact of the product to be cooked with the cooking plate, thus greatly reducing the temperature differences between the peripheral area of an element to be cooked placed on the top face of the plate and the surface of the top face of the plate in contact with the element to be cooked.

In such devices, in order to withstand the pressure generated by the saturated steam on the bottom face of the cooking plate, a jacket that makes it possible to withstand the pressure of the saturated steam in the cavity is welded under the bottom face of the cooking plate.

In such devices, link means, in the form of tie rods (in the form of round bars made of stainless steel), are provided to support the plate and keep it in a planar state, thus avoiding the deformations associated with the pressure and the temperature. These tie rods are cylindrical and arranged under the cooking plate. They link the cooking plate to a bottom partition of the jacket, notably making it possible to limit the thickness of the cooking plate and of the jacket.

These tie rods are mounted by welding, which makes it complex, heavy, time-consuming and material-intensive. The use of such tie rods further involves a risk of deformation of the plate, even of breakage in operation, due to the spaced arrangement of the tie rods subjected to the pressure prevailing in the cavity.

The invention described in the prior application FR 2 977 133 aims to at least partly eliminate these drawbacks and proposes link means (in the form of a pleat) arranged so that the pressure created by the saturated steam, generated by the presence of the products to be cooked on the plate, can be exerted substantially uniformly over the entire bottom surface of the plate that is subjected to the action of the saturated steam.

US-A-3,968,787 describes structural support members affixed to one another to form a grid-like support arrangement secured to an upper surface of a sealed vapor chamber of a cooking device.

The present invention proposes a refinement to the technology described in this prior application, with the notable aim of simplifying the manufacture of a cooking device of the abovementioned type and of avoiding certain problems which can arise in the placement and fixing of the link means.

To this end, the present invention proposes a method for manufacturing a device for cooking food products by contact, of griddle type, this device comprising a top cooking plate, heating means for heating and maintaining the plate at a substantially uniform and constant temperature by the generation of saturated steam and water condensation under the plate in the presence of the products to be cooked, a bottom partition intended to be heated by the heating means, and link means mounted between the plate and the partition to maintain the plate in a planar state, characterized in that, the link means comprising a plurality of bars of elongate form comprising mutual fitting means, the method comprises the steps consisting in:
a) intercrossing or interlocking the bars and fitting them one into the other so as to form a grid, and
b) fastening the grid to the plate and to the partition, for example by brazing, the grid extending in a plane substantially parallel to the plate and to the partition.

The invention is particularly advantageous in that the grid forming the link means of the cooking device has a good stability and a good withstand strength, which simplifies the placement of the link means and the manufacturing of the device. In practice, intercrossing and the fitting of the bars ensure that a relatively rigid grid is formed, the withstand strength and the stability of which are assured by this particular assembly. Withstand strength should be understood to mean the fact that the grid bends little or not at all when it is handled, and stability should be understood to mean the fact that it is not deformed and does not sag when it is placed on a horizontal plane.
The step a) is preferably performed by arranging the bars directly on a bottom face of the plate (when the latter is horizontal and turned over - its bottom face then being oriented upward) or on a top face of the partition (when the latter is horizontal). Thus, the grid mounting support is formed by the plate or the partition of the cooking device.

As a variant, the grid can be attached to a bottom face of the plate or to a top face of the partition, after the step a). In other words, the grid can be preassembled before it is incorporated in the cooking device. This preassembly can, for example, be performed on a work bench, in an assembly shop.

Advantageously, the grid formed in the step a) comprises transversal bars and longitudinal bars. The transversal bars can be substantially at right angles to the longitudinal bars. The transversal and longitudinal bars can have substantially the same length. As a variant, the transversal (or, respectively, longitudinal) bars are shorter than the longitudinal (or, respectively, transversal) bars.

Each bar of the grid can extend in a plane substantially at right angles to the plate and to the partition.

Each bar can be formed by a strip of planar steel plate. This type of bar can be produced with simple and commonplace means, for example by laser cutting. There is therefore no need to invest in particular tooling as in the case of the pleats used in the prior art.

Each bar has, for example, a thickness of between 0.5 and 5 mm, and preferably between 1 and 2 mm. Each bar has, for example, a length of between 200 and 1000 mm, and preferably between 300 and 600 mm. Each bar has, for example, a height of between 5 and 30 mm, and preferably between approximately 10 and 20 mm. Each bar can be made of a corrosion-resistant metal alloy, such as stainless steel (of grade 304 stainless steel type for example).

Each bar can comprise slits or slots forming the abovementioned fitting means. These slits or slots can each have a width substantially equal to or slightly greater than the thickness of the bars. The bars can thus be fitted together with little force, thus guaranteeing the stability and the withstand strength of the grid when it is mounted and fastened.

Each bar can comprise a row of slits or slots along one of its longitudinal edges, and optionally a row of slits or slots along the other of its longitudinal edges. In the case where bars comprise slits or slots on only one of their longitudinal edges, these bars are intended to be fitted onto other bars exclusively at these edges. In the case where bars comprise slits or slots on both their longitudinal edges, these bars are intended to be fitted onto first bars at one of their longitudinal edges and onto second bars at the other of their longitudinal edges, which improves the stability of the grid.

Each bar can comprise notches or holes for the passage of water and/or of steam.

Advantageously, the step a) comprises the substeps consisting in:
a1) positioning at least one transversal bar, and
a2) positioning at least one longitudinal bar on said at least one transversal bar so that said at least one longitudinal bar is fitted into said at least one transversal bar.

Preferably, at least two transversal bars are positioned in the substep a1). These transversal bars can be those intended to be situated on opposite edges of the grid.

All the longitudinal bars are preferably positioned in the substep a2) so that they are fitted into the transversal bars.

The step a) can comprise a complementary substep consisting in:
a3) positioning the remaining transversal bars on the longitudinal bars so that these transversal bars are fitted into the longitudinal bars.

The present invention also relates to link means for maintaining in a planar state a cooking plate of a device for cooking food products by contact, of griddle type, characterized in that they are in the form of a grid comprising a plurality of bars of elongate form, which are intercrossed and fitted one into the other.

Other features and advantages of the present invention will become more clearly apparent on reading the following description of an embodiment of the invention, given as a nonlimiting example, with reference to the attached drawings, in which:
- figure 1 represents a longitudinal cross-sectional view of a plate cooking device of griddle type,
- figure 2 represents a perspective view of a cooking appliance comprising a plate cooking device of griddle type,
- figure 3 represents a perspective view of link means according to the invention,
- figures 4 and 5 represent views of two types of bars of the link means of figure 3, and
- figure 6 represents a perspective view of two bars, fitted one into the other, of the link means of figure 3.

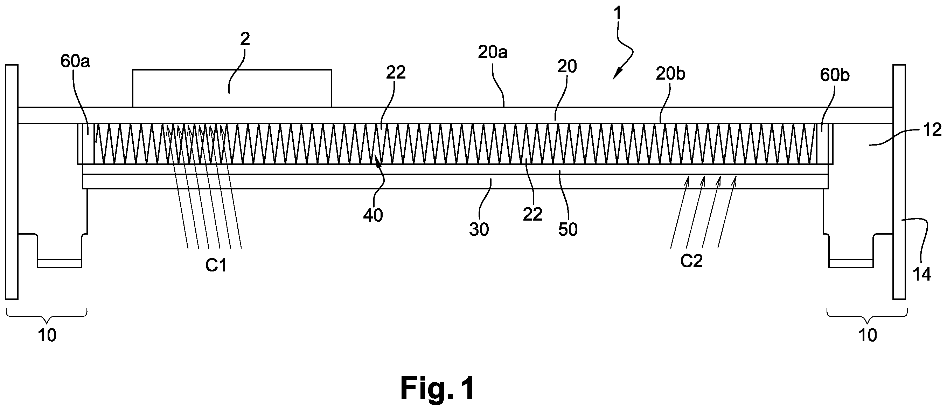

Figure 1 illustrates a plate cooking device 1 for food products 2, of griddle type.

The device 1 for cooking food products 2 comprises:
- a frame 10,
- a cooking plate 20,
- heating means 30,
- link means 40, and
- a bottom partition 50.

The frame 10 comprises a plinth 12 and feet 14. The plinth 12 is arranged to receive the heating means 30 for the cooking plate 20. The plinth 12 supports, on the one hand, the cooking plate 20 and, on the other hand, the internal partition 50. The feet 14 make it possible, on the one hand, to support the cooking device 1 on a plane 16 and, on the other hand, to hold the cooking plate 20 laterally.

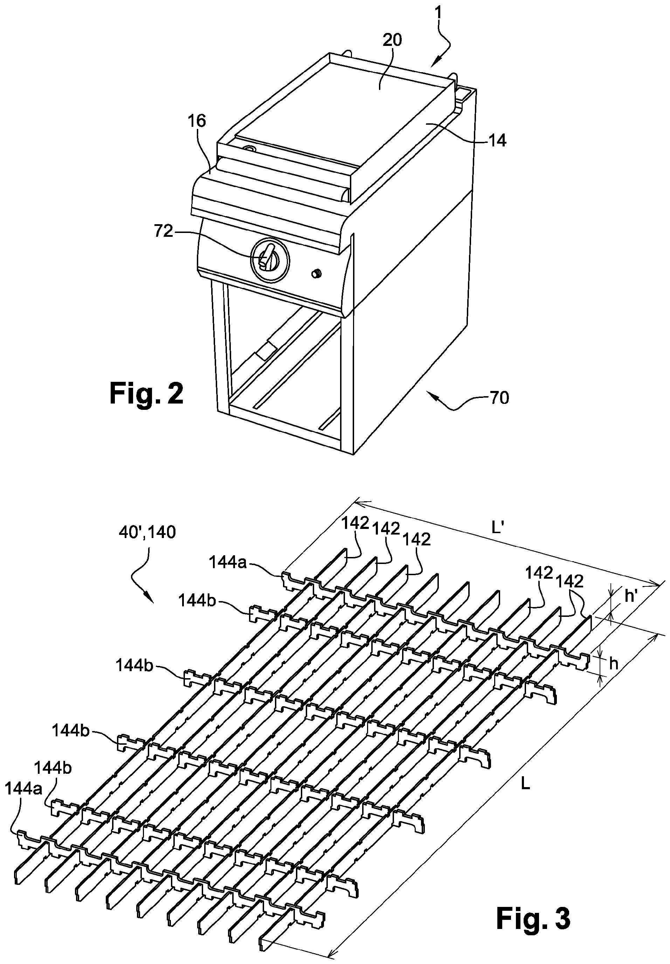

The frame 10, the plinth 12 and the feet 14 can also make it possible to mount the cooking device 1 in an appliance as represented in figure 2.

Figure 2 in effect shows a cooking appliance 70 coupled to the cooking device 1 according to the invention. The appliance 70 is thus arranged to receive the cooking device 1, and more particularly to receive the frame 10, the plinth 12 and the feet 14.

In one embodiment of the cooking device 1 according to the invention, the heating means 30 can be heating means (not represented in figure 2) coupled to the appliance 70. The appliance 70 can thus comprise heating means suitable for heating the bottom partition 50 and setting means 72 for the heating means suitable for setting said heating means and adjusting the temperature of the cooking plate 20.

The cooking plate 20 is intended to receive at least one food product to be cooked 2 and forms in the plinth 12, with the bottom partition 50, a cavity 22 in which are mounted, for example by brazing, the link means 40. The cooking plate 20 comprises a top surface 20a intended to receive the food products 2 to be cooked and a bottom surface 20b.

Lateral walls 60a and 60b make it possible, with two other walls (not represented in this longitudinal cross-sectional view), to enclose the surround of the cavity so as to define a heat pipe space, that is to say a space that makes it possible to transfer heat between the heating means 30 and the cooking plate 20. Water is arranged in the cavity 22 and is intended to be heated.

The heating means 30, for example gas or electric, make it possible to heat the cavity 22 to the temperature selected for the cooking.

The link means 40 are mounted in the cavity 22, between the bottom partition 50 and the cooking plate 20, and are fastened, for example by brazing, to the plate 20 and the partition 50. These links means 40 are provided to maintain the cooking plate 20 in a planar state.

Figures 3 to 6 represent an embodiment of the link means 40' according to the invention, which here take the form of a grid 140 comprising a plurality of bars 142, 144 which are intercrossed and are fitted one into the other.

In the example represented, a bar is a substantially rectilinear strip of planar steel plate which has an elongate form, its width h, h' or height being very small relative to its length L, L'. Its length L, L' is, for example, more than ten times greater than its width h, h', and preferably at least equal to twenty times its width.

The grid 140 here comprises two types of bars, longitudinal bars 142 and transversal bars 144 (144a and 144b). The longitudinal bars 142 are substantially parallel to one another and at a distance from one another, and there are nine of them in the example represented. The transversal bars 144 are substantially parallel to one another and at a distance from one another, and there are six of them in the example represented.

The longitudinal bars 142 are here substantially at right angles to the transversal bars 144. In the mounting position in the grid 140, each bar 142, 144 is substantially vertical and therefore substantially at right angles to the plane of the grid 140 and to the plane of the cooking plate 20.

The grid 140 is intended to extend substantially entirely in the cavity 22. These dimensions are therefore determined as a function of those of the cavity 22 so that, on the one hand, the longitudinal ends of the bars 142, 144 can come to bear on and be fastened, for example by brazing, to the lateral walls of the cavity 22 and, on the other hand, their top and bottom ends can come to bear on and be fastened, for example by brazing, to the cooking wall 20 and to the partition 50, respectively.

As can be seen in figure 3, the grid 140 has a length dictated by the length L of the longitudinal bars 142 and a width dictated by the length L' of the transversal bars 144. The thickness or the height of the grid 140 is dictated by the widths h, h' of the bars, which are substantially identical.

In a particular embodiment of the invention, the longitudinal bars 142 have a length L of approximately 600 mm and the transversal bars 144 have a length L' of approximately 300 mm, the grid 140 thus having the dimensions 300 x 600 mm. The bars are, for example, made of stainless steel and can have a thickness e of the order of approximately 1 to 2 mm and a height h, h' of the order of approximately 15 mm.

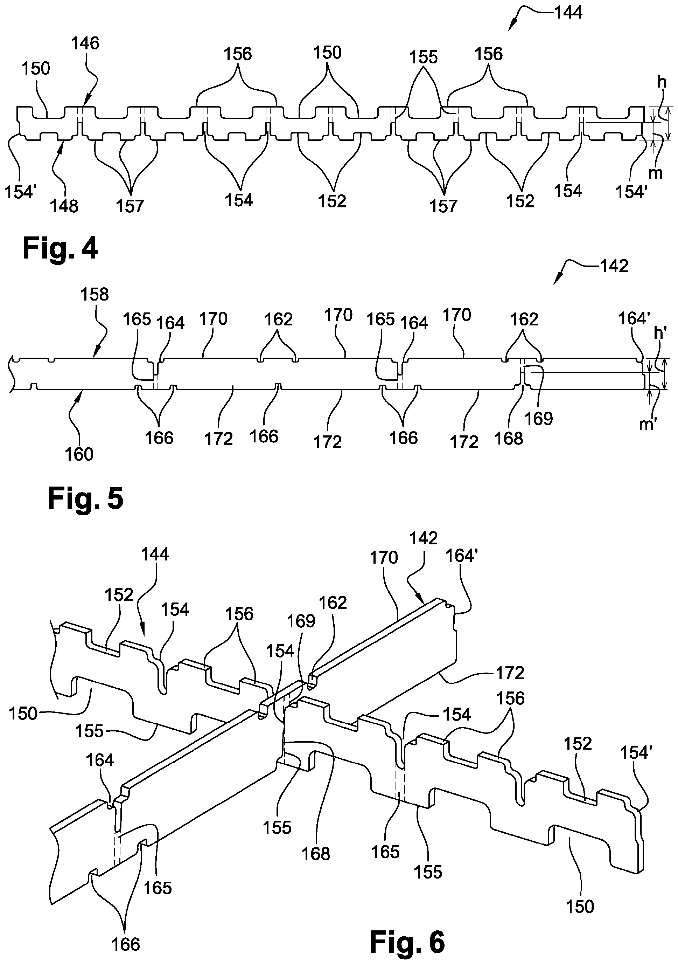

The transversal 144 and longitudinal 142 bars will now be descried in more detail with reference to figures 4 and 5, respectively.

Each transversal bar 144 (figure 4) comprises two longitudinal edges 146, 148, a first 146 of these edges comprising a row of through-notches 150 and the second edge 148 comprising both a row of through notches 152 and a row of through slots 154 or slits.

The notches 150, 152 allow the passage and circulation of the water and the steam in the cavity 22 of the cooking device. These notches have a generally rectangular form in which one of the large sides of the rectangle extends along the corresponding longitudinal edge 146, 148. In the example represented, the notches 150 have dimensions greater than those of the notches 152, and notably have a length (measured along the axis of elongation of the bar 144) greater than that of the notches 152.

Each bar 144 here comprises ten notches 150 evenly distributed along its edge 146 and ten notches 152 evenly distributed along its edge 148, each notch 150 being aligned with a notch 152 in a plane at right angles to the plane of the bar (which, here, is the plane of the drawing).

The portions of the edge 146, extending between the notches 150, define surfaces 156 bearing on the wall 20 or the partition 50 of the cooking device.

The portions of the edge 148, extending between the notches 152, also define surfaces 157 bearing on the partition 50 or the wall 20, and comprise the above-mentioned slots 154.

Each slot 154 is here in the general form of a T and comprises a substantially horizontal bar which extends along the edge 148 and which is linked substantially at its middle to a substantially vertical bar which extends from the horizontal bar to the opposite edge 146 of the bar. The vertical bar of each slot 154 thus extends in a plane at right angles to the plane of the bar, to at least mid-height or mid-width of the bar 144. The height m of each slot 154 thus satisfies the equation m≥h/2, h being the width (or height) of the bar 144. The part 155 of the bar 144 extending between the top end of each slot 154 and the edge 146 is delimited by dotted lines in figure 4.

Each bar 144 here comprises nine slots 154 evenly distributed along the edge 148.

As can be seen in figure 4, the longitudinal ends of the bar 144 comprise half-slots 154'. This can result from the method of manufacturing the bars 144. In practice, in the case where the latter are manufactured from a strip of steel plate wound in the form of a reel, each strip of steel plate can first be cut to form therein the rows of notches 150, 152 and of slots 154, then again cut to define bars of a predetermined length. These last cuts can be made at the slots 154, in planes at right angles to the plane of the bar 144, thus forming half-slots 154' at the longitudinal ends of each bar.

As will be described hereinbelow, the bar 144 can be used in the position as represented in figure 4, in which the slots 154 are oriented downward, or in the contrary position in which the slots 154 are oriented upward.

Each longitudinal bar 142 (figure 5) comprises two longitudinal edges 158, 160, a first 158 of these edges comprising a row of through notches 162 or holes and a row of through slots 164 or slits, and the second edge 160 also comprising a row of through notches 166 or holes and a row of through slots 168 or slits.

The notches 162, 166 allow the passage and the circulation of the water and of the steam in the cavity 22 of the cooking device. These notches have a generally substantially rectangular or semi-circular form, one side of which extends along the longitudinal edge 158, 160, respectively. The notches 162, 166 are substantially identical in the example represented.

The bar 142 of figure 5 is only partially represented. In this embodiment, each bar 142 here comprises ten notches 162 evenly distributed along its edge 158 and eleven notches 166 evenly distributed along its edge 160.

The notches 162 of the edge 158 are distributed in pairs of two adjacent notches, the edge 158 comprising a row of five pairs of such notches 162, which are evenly distributed along the edge 158. The portions of the edge 158, extending between the notches 162, define surfaces 170 bearing on the wall 20 or the partition 50 of the cooking device, and comprise the abovementioned slots 164.

Some notches 166 of the edge 160 are distributed in pairs of two adjacent notches, and others are isolated. The edge 160 comprises a row of four pairs of notches 166, which are evenly distributed along the edge 160, and three isolated notches 166, each of these isolated notches being positioned between two adjacent pairs of notches and at mid-distance therefrom.

The portions of the edge 160, extending between the notches 166, also define surfaces 172 bearing on the partition 50 or the wall 20, the portions of the edge 160 corresponding to the two longitudinal end parts of the bars 142 comprising the abovementioned slots 168.

Each slot 164, 168 is here in the general form of a T and is substantially identical to the slot 154 described with reference to figure 4.

Each bar 142 here comprises four slots 164 on its edge 158 and two slots 168 on its edge 160. The slots 164 extend in planes that are parallel to one another and at right angles to the plane of the bar 142, the planes of the slots 164 being, in addition, situated between the planes of the slots 168, which are themselves situated in the vicinity of the longitudinal ends of the bars 142.

Each slot 164, 168 extends at least to mid-height of the bar 142, the height m' of each slot 154 therefore satisfies the equation m'≥h'/2, h' being the width (or height) of the bar 142. The part 165 of the bar 142 extending between the top end of each slot 164 and the edge 160 is delimited by dotted lines in figure 5, and the part 169 of the bar 142 extending between the top end of each slot 168 and the edge 158 is also delimited by dotted lines in this figure.

As can be seen in figure 5, the longitudinal ends of the bar 142 comprise half-slots 164'. This can result from the method of manufacturing the bars 142, as explained above.

The bar 142 can be used in the position as represented in figure 5, in which the slots 164 are oriented upward, or in the contrary position in which these slots 164 are oriented downward.

The slots 154, 164 and 168 of the bars 142, 144 are designed and dimensioned to form mutual fitting means, a slot of one bar being intended to cooperate with a slot of another bar, as can be seen in figure 6.

In the example represented, the heights m, m' of the slots 154, 164, 168 are dimensioned so that these slots can receive, by fitting, the parts 165, 169, 155, respectively. More specifically, the height m of the slots 154 of each bar 144 is dimensioned so that these slots can each receive, by fitting, a part 165 or 169 of a bar 142. The height m' of the slots 164, 168 of each bar 142 is dimensioned so that these slots can each receive, by fitting, a part 155 of a bar 144.

The simple fitting of one bar into another bar, as illustrated in figure 6, is sufficient to stabilize these bars in a substantially vertical position. The other bars can thus be fitted onto these bars, without the risk of the assembly sagging.

There now follows a description of a method of assembling the grid 140 represented in figure 3, this assembly being able to be carried out:
- on a planar support of a work bench in a workshop for example, before the pre-assembled grid 140 is attached in the cavity 22 of the cooking device; or
- on the bottom face 20b of the cooking wall 20, which is then turned over so that this face is oriented upward; or
- on the top face of the partition 50.

Initially, two transversal bars (referenced 144a in figure 3) are positioned, these bars being intended to extend in the vicinity of the small sides of the grid, as can be seen in figure 3. Regarding this, it is important to note that the grid 140 is represented in figure 3 in its final position mounted in the cavity 22, which is different from its assembly position. In the assembly position, the grid 140 is turned over relative to that represented, that is to say that the transversal bars 144a are seen as being situated under the longitudinal bars 142 and not above them. In other words, the longitudinal bars 142 are fitted onto the transversal bars 144a and not the reverse. This is done in a second stage, this fitting being performed by positioning the bars 142 one after the other on top of the bars 144a and then displacing them one after the other in a substantially vertically downward direction. The first step can be to fit the two bars 144 situated in the vicinity of the long sides of the grid, in order to prepare a frame with the two first bars 144a. The next step consists in fitting the other transversal bars 144b by positioning them on the bars 142 and by displacing them in a substantially vertically downward direction. It will then be understood that the bars 144a and the bars 144b do not have the same orientations because the bars 144a used first have their slots 154 oriented upward whereas the bars 144b used last have their slots 154 oriented downward. The grid 140 is then fastened to the cooking plate 20 and to the partition 50 by brazing. For this, a braze coating is deposited on the cooking plate 20 and the partition 50, before or after the assembly of the grid 140, then the assembly comprising the plate 20, the partition 50, the grid 140, and the peripheral elements (notably the walls 60a and 60b) defining the cavity 22 are heated in an appropriate oven, until the braze coating melts and the different parts are joined. It is naturally possible to envisage having at least some of these operations automated and performed by a robot.

In operation, because the surfaces of contact of the grid 140 with the bottom face 20b of the cooking plate 20 are relatively small, the pressure exerted on the bottom surface 20b of the cooking plate 20 and the temperature of the bottom surface 20b of the cooking plate 20 are uniform, unlike in the existing solutions comprising struts of cylindrical form.

The grid 140 is arranged in such a way that the condensation of water C1 (figure 1) under the action of the food products to be cooked 2 can extend substantially and uniformly over the entire bottom surface 20b of the cooking plate 20 subjected to the action of the saturated steam.

The heating produced by the heating means 30 allows for the direct heating C2 of the bottom partition 50 by the heating means 30. The heated bottom partition 50 then allows the transfer of heat to the water arranged in the cavity 22, which generates saturated steam and the condensation of water under the cooking plate 20, on its bottom face 20b, so as to make the pressure exerted on the bottom surface 20b of the cooking plate 20 and the temperature of the cooking plate 20 uniform.

When a product to be cooked 2, of a temperature lower than the temperature of the heated cooking plate 20, is deposited on said plate 20, the temperature difference induces a saturation of steam in the cavity 22, by the food products to be cooked 2, and a condensation of water on the bottom surface 20b of the cooking plate 20. This condensation over almost all of the surface of the bottom face 20b of the cooking plate 20 allows the plate 20 to return quickly to a uniform and constant temperature.

## Claims

1. A method for manufacturing a device (1) for cooking food products (2) by contact, of griddle type, this device comprising a top cooking plate (20), heating means (30) for heating and maintaining the plate at a substantially uniform and constant temperature by the generation of saturated steam and water condensation under the plate in the presence of the products to be cooked, a bottom partition (50) intended to be heated by the heating means, and link means (40') mounted between the plate and the partition to maintain the plate in a planar state, **characterized in that**, the link means comprising a plurality of bars (142, 144) of elongate form comprising mutual fitting means (154, 164, 168), the method comprises the steps consisting in:
a) intercrossing or interlocking the bars and fitting them one into the other so as to form a grid (140), and
b) fastening the grid to the plate and to the partition, for example by brazing, the grid extending in a plane substantially parallel to the plate and to the partition.

2. The method as claimed in claim 1, **characterized in that** the step a) is performed by arranging the bars (142, 144) directly on a bottom face of the plate (20) or on a top face of the partition (50).

3. The method as claimed in claim 1, **characterized in that** the grid (140) is attached to a bottom face of the plate (20) or to a top face of the partition (50), after the step a).

4. The method as claimed in any one of the preceding claims, **characterized in that** the grid (140) formed in the step a) comprises transversal bars (144) and longitudinal bars (142), the transversal bars being, for example, substantially at right angles to the longitudinal bars.

5. The method as claimed in any one of the preceding claims, **characterized in that** each bar (142, 144) of the grid (140) extends in a plane substantially at right angles to the plate (20) and to the partition (50).

6. The method as claimed in any one of the preceding claims, **characterized in that** each bar (142, 144) is formed by a strip of planar steel plate.

7. The method as claimed in any one of the preceding claims, **characterized in that** each bar (142, 144) comprises slits or slots (154, 164, 168) forming the abovementioned fitting means.

8. The method as claimed in claim 7, **characterized in that** the slits or slots (154, 164, 168) each have a width substantially equal to or slightly greater than the thickness of the bars (142, 144).

9. The method as claimed in claim 7 or 8, **characterized in that** each bar (142, 144) comprises a row of slits or slots (154, 164) along one of its longitudinal edges (146, 158), and optionally a row of slits or slots (168) along the other of its longitudinal edges (160).

10. The method as claimed in any one of the preceding claims, **characterized in that** each bar (142, 144) comprises notches (150, 152, 162, 166) or holes for the passage of water and/or of steam.

11. The method as claimed in any one of the preceding claims, **characterized in that** the step a) comprises the substeps consisting in:
a1) positioning at least one transversal bar (144), and
a2) positioning at least one longitudinal bar (144) on said at least one transversal bar so that said at least one longitudinal bar is fitted into said at least one transversal bar.

12. The method as claimed in claim 11, **characterized in that** at least two transversal bars (144a) are positioned in the substep a1), these transversal bars being preferably those intended to be situated on opposite edges of the grid (140).

13. The method as claimed in claim 12, **characterized in that** all the longitudinal bars (142) are positioned in the substep a2) so that they are fitted into the transversal bars (144a).

14. Method according to Claim 13, **characterized in that** the step a) comprises a complementary substep consisting in :
a3) positioning the remaining transversal bars (144b) on the longitudinal bars (142) so that these transversal bars are fitted into the longitudinal bars.

15. Device (1) for cooking food products (2) by contact, of grille type, this device comprising a top cooking plate (20), heating means (30) for heating and maintaining the plate at a substantially uniform and constant temperature by the generation of saturated steam and water condensation under the plate in the presence of the products to be cooked, a bottom partition (50) intended to be heated by the heating means, and link means (40') mounted between the plate and the partition to maintain the plate (20) in a planar state, **characterized in that** the link means comprise a plurality of bars (142, 144) of elongate form comprising mutual fitting means (154, 164, 168), said bars being interlaced and fitted one into the other so as to form a grille (140), and said grille extending in a plane substantially parallel to the plate and to the partition and being fastened to said plate and to said partition, for example by brazing.

## Patentansprüche

1. Verfahren zur Herstellung einer Vorrichtung (1) zum Garen von Nahrungsmittelprodukten (2) durch Kontakt, nach Art einer Grillplatte, wobei diese Vorrichtung eine obere Kochplatte (20), ein Heizmittel (30) zum Heizen und Halten der Platte auf einer im Wesentlichen gleichförmigen und konstanten Temperatur durch Erzeugung von gesättigtem Dampf und Wasserkondensation unter der Platte in Anwesenheit der zu garenden Produkte, eine Bodenunterteilung (50), die vom Heizmittel geheizt werden soll, und Verbindungsmittel (40'), die zwischen der Platte und der Unterteilung angebracht sind, um die Platte in einem ebenen Zustand zu halten, umfasst, **dadurch gekennzeichnet, dass** das Verbindungsmittel eine Vielzahl von Stäben (142, 144) einer länglichen Form umfasst, die gegenseitige Passmittel (154, 164, 168) umfassen, wobei das Verfahren die folgenden Schritte umfasst:
a) Überkreuzen oder Verriegeln und ineinander Einpassen der Stäbe zur Bildung eines Gitters (140), und
b) Befestigen des Gitters an der Platte und an der Unterteilung, beispielsweise durch Hartlöten, wobei sich das Gitter in einer Ebene erstreckt, die im Wesentlichen parallel zur Platte und zur Unterteilung ist.

2. Verfahren nach Anspruch 1, **dadurch gekennzeichnet, dass** der Schritt a) dadurch durchgeführt wird, dass die Stäbe (142, 144) direkt auf einer Unterseite der Platte (20) oder auf einer Oberseite der Unterteilung (50) angeordnet werden.

3. Verfahren nach Anspruch 1, **dadurch gekennzeichnet, dass** das Gitter (140) nach Schritt a) an der Unterseite der Platte (20) oder an der Oberseite der Unterteilung (50) angeordnet wird.

4. Verfahren nach einem der vorhergehenden Ansprüche, **dadurch gekennzeichnet, dass** das in Schritt a) gebildete Gitter (140) Querstäbe (144) und Längsstäbe (142) umfasst, wobei die Querstäbe beispielsweise im Wesentlichen rechtwinklig zu den Längsstäben angeordnet sind.

5. Verfahren nach einem der vorhergehenden Ansprüche, **dadurch gekennzeichnet, dass** sich jeder Stab (142, 144) des Gitters (140) in einer Ebene im Wesentlichen rechtwinklig zur Platte (20) und der Unterteilung (50) erstreckt.

6. Verfahren nach einem der vorhergehenden Ansprüche, **dadurch gekennzeichnet, dass** jeder Stab (142, 144) von einem Streifen einer ebenflächigen Stahlplatte gebildet wird.

7. Verfahren nach einem der vorhergehenden Ansprüche, **dadurch gekennzeichnet, dass** jeder Stab (142, 144) Schlitze oder Spalte (154, 164, 168) umfasst, die die oben erwähnten Passmittel bilden.

8. Verfahren nach Anspruch 7, **dadurch gekennzeichnet, dass** die Schlitze oder Spalte (154, 164, 168) jeweils eine Breite aufweisen, die der Dicke der Stäbe (142, 144) gleicht oder etwas größer als diese ist.

9. Verfahren nach Anspruch 7 oder 8, **dadurch gekennzeichnet, dass** jeder Stab (142, 144) eine Reihe von Schlitzen oder Spalten (154, 164) entlang einer seiner Längskanten (146, 158) und fakultativ eine Reihe von Schlitzen oder Spalten (168) entlang der anderen seiner Längskanten (160) umfasst.

10. Verfahren nach einem der vorhergehenden Ansprüche, **dadurch gekennzeichnet, dass** jeder Stab (142, 144) Einkerbungen (150, 152, 162, 166) oder Löcher zum Durchleiten von Wasser und/oder Dampf umfasst.

11. Verfahren nach einem der vorhergehenden Ansprüche, **dadurch gekennzeichnet, dass** der Schritt a) die folgenden Teilschritte umfasst:
a1) Platzieren mindestens eines Querstabs (144), und
a2) Platzieren mindestens eines Längsstabs (144) auf dem mindestens einen Querstab, so dass der mindestens eine Längsstab in den mindestens einen Querstab eingepasst wird.

12. Verfahren nach Anspruch 11, **dadurch gekennzeichnet, dass** mindestens zwei Querstäbe (144a) im Teilschritt a1) platziert werden, wobei diese Querstäbe vorzugsweise diejenigen sind, die an gegenüberliegenden Kanten des Gitters (140) angeordnet werden sollen.

13. Verfahren nach Anspruch 12, **dadurch gekennzeichnet, dass** alle Längsstäbe (142) im Teilschritt a2) platziert werden, so dass sie in die Querstäbe (144a) eingepasst werden.

14. Verfahren nach Anspruch 13, **dadurch gekennzeichnet, dass** der Schritt a) einen komplementären Teilschritt umfasst, der besteht aus:
a3) Platzieren der restlichen Querstäbe (144b) auf den Längsstäben (142), so dass diese Querstäbe in die Längsstäbe eingepasst werden.

15. Vorrichtung (1) zum Garen von Nahrungsmittelprodukten (2) durch Kontakt, nach Art eines Grills, wobei diese Vorrichtung eine obere Kochplatte (20), ein Heizmittel (30) zum Heizen und Halten der Platte auf einer im Wesentlichen gleichförmigen und konstanten Temperatur durch Erzeugung von gesättigtem Dampf und Wasserkondensation unter der Platte in Anwesenheit der zu garenden Produkte, eine Bodenunterteilung (50), die vom Heizmittel geheizt werden soll, und Verbindungsmittel (40'), die zwischen der Platte und der Unterteilung angebracht sind, um die Platte (20) in einem ebenen Zustand zu halten, umfasst, **dadurch gekennzeichnet, dass** das Verbindungsmittel eine Vielzahl von Stäben (142, 144) einer länglichen Form umfasst, die gegenseitige Passmittel (154, 164, 168) umfassen, wobei die Stäbe miteinander verflochten und ineinander eingepasst sind, um einen Grill (140) zu bilden, und wobei sich der Grill in einer Ebene erstreckt, die im Wesentlichen parallel zur Platte und zur Unterteilung ist, und beispielsweise durch Hartlöten an der Platte und an der Unterteilung befestigt ist.

## Revendications

1. Procédé de fabrication d'un dispositif de cuisson (1) de produits alimentaires (2) par contact, de type plancha, ce dispositif comprenant une plaque supérieure (20) de cuisson, des moyens de chauffage (30) pour chauffer et maintenir la plaque à une température sensiblement homogène et constante par génération de vapeur d'eau saturée et condensation d'eau sous la plaque en présence des produits à cuire, une cloison inférieure (50) destinée à être chauffée par les moyens de chauffage, et des moyens de liaison (40') montés entre la plaque et la cloison pour maintenir la plaque dans un état plan, **caractérisé en ce que**, les moyens de liaison comprenant une pluralité de barrettes (142, 144) de forme allongée comportant des moyens (154, 164, 168) d'emboîtement mutuels, le procédé comprend les étapes consistant à :
a) entrecroiser ou entrelacer les barrettes et les emboîter les unes dans les autres de façon à former une grille (140), et
b) fixer la grille à la plaque et à la cloison, par exemple par brasage, la grille s'étendant dans un plan sensiblement parallèle à la plaque et à la cloison.

2. Procédé selon la revendication 1, **caractérisé en ce que** l'étape a) est réalisée en disposant les barrettes (142, 144) directement sur une face inférieure de la plaque (20) ou sur une face supérieure de la cloison (50).

3. Procédé selon la revendication 1, **caractérisé en ce que** la grille (140) est rapportée sur une face inférieure de la plaque (20) ou sur une face supérieure de la cloison (50), après l'étape a).

4. Procédé selon l'une quelconque des revendications précédentes, **caractérisé en ce que** la grille (140) formée à l'étape a) comprend des barrettes transversales (144) et des barrettes longitudinales (142), les barrettes transversales étant par exemple sensiblement perpendiculaires aux barrettes longitudinales.

5. Procédé selon l'une quelconque des revendications précédentes, **caractérisé en ce que** chaque barrette (142, 144) de la grille (140) s'étend dans un plan sensiblement perpendiculaire à la plaque (20) et à la cloison (50).

6. Procédé selon l'une quelconque des revendications précédentes, **caractérisé en ce que** chaque barrette (142, 144) est formée par une bande d'acier plane.

7. Procédé selon l'une quelconque des revendications précédentes, **caractérisé en ce que** chaque barrette (142, 144) comprend des échancrures ou fentes (154, 164, 168) formant les moyens d'emboîtement précités.

8. Procédé selon la revendication 7, **caractérisé en ce que** les échancrures ou fentes (154, 164, 168) ont chacune une largeur sensiblement égale ou légèrement supérieure à l'épaisseur des barrettes (142, 144).

9. Procédé selon la revendication 7 ou 8, **caractérisé en ce que** chaque barrette (142, 144) comprend une rangée d'échancrures ou fentes (154, 164) le long de l'un de ses bords longitudinaux (146, 158), et éventuellement une rangée d'échancrures ou fentes (168) le long de l'autre de ses bords longitudinaux (160).

10. Procédé selon l'une quelconque des revendications précédentes, **caractérisé en ce que** chaque barrette (142, 144) comprend des encoches (150, 152, 162, 166) ou des trous de passage d'eau et/ou de vapeur d'eau.

11. Procédé selon l'une quelconque des revendications précédentes, **caractérisé en ce que** l'étape a) comprend les sous-étapes consistant à :
a1) positionner au moins une barrette transversale (144), et
a2) positionner au moins une barrette longitudinale (144) sur ladite au moins une barrette transversale de façon à ce que ladite au moins une barrette longitudinale s'emboîte dans ladite au moins une barrette transversale.

12. Procédé selon la revendication 11, **caractérisé en ce qu'**au moins deux barrettes transversales (144a) sont positionnées à la sous-étape a1), ces barrettes transversales étant de préférence celles destinées à être situées sur des bords opposés de la grille (140).

13. Procédé selon la revendication 12, **caractérisé en ce que** toutes les barrettes longitudinales (142) sont positionnées à la sous-étape a2) de façon à ce qu'elles s'emboîtent dans les barrettes transversales (144a).

14. Procédé selon la revendication 13, **caractérisé en ce que** l'étape a) comprend une sous-étape complémentaire consistant à :
a3) positionner les barrettes transversales (144b) restantes sur les barrettes longitudinales (142) de façon à ce que ces barrettes transversales s'emboîtent dans les barrettes longitudinales.

15. Dispositif de cuisson (1) de produits alimentaires (2) par contact, de type gril, ce dispositif comprenant une plaque supérieure (20) de cuisson, des moyens de chauffage (30) pour chauffer et maintenir la plaque à une température sensiblement homogène et constante par génération de vapeur d'eau saturée et condensation d'eau sous la plaque en présence des produits à cuire, une cloison inférieure (50) destinée à être chauffée par les moyens de chauffage, et des moyens de liaison (40') montés entre la plaque et la cloison pour maintenir la plaque dans un état plan, **caractérisé en ce que** les moyens de liaison comprennent une pluralité de barrettes (142, 144) de forme allongée comportant des moyens (154, 164, 168) d'emboîtement mutuels,
lesdites barrettes étant entrecroisées et emboîtées les unes dans les autres de façon à former un grille (140), et
ledit gril s'étendant dans un plan sensiblement parallèle à la plaque et à la cloison et étant fixé à ladite plaque et à ladite cloison par exemple par brasage.
